# EUROPEAN PATENT APPLICATION

(11) **EP 2 292 356 A1**
(43) Date of publication of application: **09.03.2011**
(21) Application number: 10009057.0
(22) Date of filing: 31.08.2010
(51) Int. Cl.: B22F 3/10, C22C 29/16

(54) **Manufacture of sintered silicon alloy**

(30) Priority: 02.09.2009 JP 2009202440
(71) Applicant: Isman J Corporation, Kawasaki-ku Kawasaki-shi Kanagawa 210-0855 (JP)
(72) Inventor: Shimizu, Kouki, Tokyo (JP); Matsushita, Masafumi, Yokohama-shi Kawagawa-ken (JP); Watanabe, Toshiyuki, Tokyo (JP); Matsuzono, Osamu, Saitama-shi Saitama-ken (JP); Mizushima, Hisashi, Saitama-shi Saitama-ken (JP); Yoshida, Takashi, Kawasaki-shi Kanagawa-ken (JP); Yanagino, Futoshi, Kawasaki-shi Kanagawa-ken (JP); Shitara, Takumi, Yokohama-shi Kanagawa-ken (JP); Saito, Kunio, Yokohama-shi Kanagawa-ken (JP); Matsushita, Akiko, Yokohama-shi Kanagawa-ken (JP); Kubota, Yumiko, Kamakura-shi Kanagawa-ken (JP); Shindo, Ayumi, Yokohama-shi Kanagawa-ken (JP); Shindo, Setsuko, Kawasaki-shi Kanagawa-ken (JP); Misaki, Takayoshi, Hiratsuka-shi Kanagawa-ken (JP); Matsushita, Yoko, Yokohama-shi Kawagawa-ken (JP); Sato, Kazuya, Yokohama-shi Kanagawa-ken (JP); Sakurai, Toshitaka, Yokohama-shi Kanagawa-ken (JP)
(74) Representative: Van Straaten, Joop

(57) **Abstract**

Dehydration and drying of a silicon alloy argil which uses water as a principal binder are carried out by a freeze-drying process, a microwave irradiation process, or a combination thereof. In the freeze-drying process, the shaped compact is put into a cooling medium within 5 minutes after completion of shape forming, retained therein for at least 5 minutes to quick-freeze water within the compact while the water is still in a finely-dispersed condition. The compact is exposed to a pressure below the triple point pressure of water. In the microwave irradiation process, the shaped compact is put into a container exposed to continuous microwave irradiation at 2.450GHz for at least 5 minutes while under a reduced pressure below atmospheric pressure.

## Description

### CROSS-REFERENCE TO RELATED APPLICATION

This application claims priority on the basis of Japanese patent application 202440/2009, filed September 2, 2009. The disclosure of Japanese application 202440/2009 is hereby incorporated by reference.

### FIELD OF THE INVENTION

This invention relates generally to the manufacture of a sintered silicon alloy using a silicon-based silicon alloy, and specifically to a dehydration and drying method in the manufacturing process.

### BACKGROUND OF THE INVENTION

Conventional methods for manufacturing industrial ceramics products have generally used organic solvents as a binder. A forming process that dispenses with the use of organic solvents and utilizes water instead as the principal binder is desirable. However, water has not been employed as a binder because it has been extremely difficult to ensure stable product quality when carrying out dehydration and drying after forming.

We have carried out investigations into a technique for synthesizing a silicon alloy from silicon, specifically inexpensive silicon, which can include impurities consisting of metallic elements such as oxygen and iron, with the objective of utilizing inexpensive silicon as an industrial structural material. As a result, we have succeeded in synthesizing a silicon alloy which includes 30-70 weight % silicon, 10-45 weight % nitrogen, 1-40 weight % aluminum and 1-40 weight % oxygen from above-mentioned inexpensive silicon by way of controlled combustion synthesis. This silicon alloy manufacturing process and the apparatus used to carry out the process are described in Japanese Patent Application No. 60453/2009, which is a divisional application based on Japanese Patent Application No. 354835/2006.

We have also developed a new manufacturing technique for a sintered silicon alloy product with the combined use of a wet compound method and sintering methods. The wet compound process is **characterized in that** it utilizes a silicon alloy powder the average particle diameter of which is kept under a specified value, water, and a shape-forming binder. This manufacturing technique is described in Japanese Patent No. 4339352.

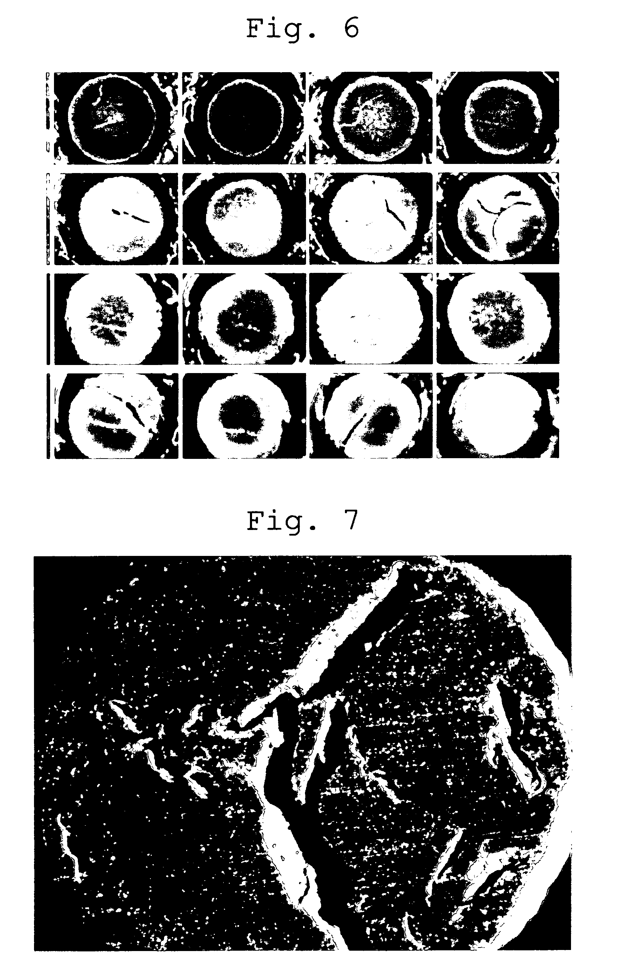

Silicon alloy products are manufactured by adding a binder and water to the silicon alloy powder, kneading the composition in a kneading machine, forming the composition into a shape corresponding to that of the final product, and then carrying out drying and sintering. In this process, however, inner cracks such as shown in FIGS. 6 and 7 are generated after sintering a dried silicon alloy argil shaped with the use of water as the principal binder.

Our research has revealed the following cause. During the formation of the argil, water within the compacted material clumps together to a plurality of points over time. The water turns into steam and evaporates, passing out of the compact through minute spaces between particles. Air then passes into holes which are left within the compact after evaporation of the water. During sintering of the dried compact, expansion of the air due to heat causes cracks to be generated within the sintered compact.

Prior art relating to sintering of silicon alloys is also found in unexamined Japanese Patent Publication No. 162851/2008, and in various published documents including "Automotive Technology 9," p. 97, Nikkei Business Publications, Inc., 2008; Toshiyuki Watanabe et al., "FC Report 26," p. 68, Japan Fine Ceramics Association, Tokyo, 2008; Teiroku Sueno and Syuichi Iwao, "Clay and its Application," by Asakura Publishing Co., Ltd., Tokyo, 1962; Japan Society for the Promotion of Science, ed., "Production and Application of Advanced Ceramics," Nikkan Kogyo Shimbun Ltd., Tokyo, 2005; and Masaaki Nakamura and Yuji Tatemoto, "Learning Basics of Drying Technique," Kogyo Chosakai Publishing Co., Ltd., Tokyo, 2008.

### SUMMARY OF THE INVENTION

As already mentioned, a conventional process of manufacturing industrial ceramic products generally includes a forming step using an organic binder, followed by removal of the binder and sintering. Organic resin is used as a binder, because it can be easily removed by heating after the forming step.

When heated at a high temperature, the organic binder turns into soot, which causes product performance degradation, and therefore the organic binder needs to be removed before sintering. The binder can be removed by slow-paced heating at a low temperature below the point at which the binder turns into soot.

Since organic binders are environment-unfriendly, inorganic binders have come under study. However, the above-mentioned problem of inner crack generation after sintering, caused by problems associated with the dehydration and drying process, has not heretofore been solved.

This invention is aimed at providing an effective method of dehydration and drying of silicon alloy argil in which water is used as a principal binder, so that silicon alloy industrial products without inner cracks can be manufactured effectively.

In each of several variations of the method according to the invention, a raw material is obtained comprising a silicon alloy powder including 30-70 weight % silicon, 10-45 weight % nitrogen, 1-40 weight % aluminum, and 1-40 weight % oxygen. The raw material is kneaded with the addition of 10-40 weight % water as a binder to form a kneaded silicon alloy argil. Then, the kneaded argil is shaped to form a silicon alloy compact having a three-dimensional shape.

In accordance with a first aspect of the invention, the compact is placed in a cooling medium within 5 minutes after completion of the shaping step, and retained in the cooling medium for at least 5 minutes, thereby quick-freezing water contained within the compact while the water is in a finely-dispersed condition. The compact is then retained in a pressure-regulated container in which the pressure is maintained at a level below the triple point pressure of water. Thereafter the compact is sintered.

In accordance with another aspect of the invention, the compact is placed in a container, and exposed to a reduced-pressure environment below 1 atmosphere within 5 minutes after completion of the shaping step. Within 5 minutes after completion of the shaping step, exposure of the compact to continuous microwave radiation is commenced, the radiation being preferably in the frequency range from 0.9 to 6GHz, e.g., at 2.450GHz. Exposure of the compact to microwave radiation is continued for at least 5 minutes. Preferably, the compact is exposed to reduced pressure throughout substantially the entire time during which it is exposed to microwave radiation.

### The compact is then sintered.

In accordance with still another aspect of the invention, the compact is placed in a cooling medium within 5 minutes after completion of the shaping step, and retained in the cooling medium for at least 5 minutes, thereby quick-freezing water contained within the compact while the water is in a finely-dispersed condition. The compact is than placed in a container, and exposed to a reduced-pressure environment below 1 atmosphere. The compact is exposed to continuous microwave radiation at 2.450GHz for at least 5 minutes, and then sintered. Here again, the compact is preferably exposed to reduced pressure throughout substantially the entire time during which it is exposed to microwave radiation.

In each of the above variations at least one additive may be optionally added to the silicon alloy powder to form a mixture, the additive being from the group consisting of an inorganic binder and a sintering additive. The inorganic binder is composed mainly of silicon dioxide and aluminum, and, if present, constitutes 0.5 - 10 weight % of the mixture. The sintering additive, if present, constitutes up to 5 weight % of the mixture.

In each variation, optionally the kneading step the shape forming step, or both, are conducted in a reduced-pressure environment below atmospheric pressure.

The invention enables water within a compact to be removed while still in a finely dispersed condition before aggregation. The invention thereby prevents the generation of voids that result in the formation of cracks after sintering. The process of the invention allows shape forming of ceramic products to be carried out at high speed, and thereby dramatically improves productivity in comparison to productivity achieved by the use of conventional methods. Improved productivity results in a reduction in the price of industrial ceramic products, and increases opportunities for their application.

The method according to the invention also enables stable production of high quality ceramics products using water as a principal binder, and without using harmful organic solvents. The application of this technique, which enables water to be used as a principal binder, can be expected to spread throughout the ceramics industry, which would bring about beneficial effects in terms of environmental conservation.

### BRIEF DESCRIPTION OF THE DRAWINGS

FIG. 1 is a schematic flow chart illustrating the process of manufacturing a sintered silicon alloy in accordance with the invention;

FIG. 2 is a pressure-temperature phase diagram for water, illustrating the mechanism of the quick freeze-drying method;

FIG. 3 is a cross-sectional photograph showing the inside of a silicon alloy ball after drying and before sintering;

FIG. 4 is a cross-sectional photograph of silicon alloy balls after sintering;

FIG. 5 is a pressure-temperature phase diagram for water, illustrating the mechanism of microwave irradiation;

FIG. 6 is a photograph showing the inner cracks in a sintered silicon alloy made by the conventional dehydration and drying method; and

FIG. 7 is a magnified photograph showing the inner cracks in a sintered silicon alloy made by the conventional dehydration and drying method.

### DETAILED DESCRIPTION OF THE PREFERRED EMBODIMENTS

As already mentioned, cracks are generated because water within a silicon alloy argil tends to aggregate in clumps at a plurality of points over time. The water in these clumps turns into steam and evaporates out of the compact, leaving within the dried compact holes which fill with air.

We have found two effective ways to minimize the aggregation of water within the compact in order to prevent generation of cracks. A first method is the quick freeze-drying method (hereinafter referred to as the "FD method"). The second method is the microwave irradiation method (hereinafter referred to as the "MW method". Each method will be described in detail below.

According to the FD method, a silicon alloy argil is formed into shapes corresponding to final products, and placed in a cooling medium for quick freezing, whereby finely dispersed water is turned into fine ice particles within the compact. Examples of preferable cooling media include liquid nitrogen, and soluble alcohol cooled by dry ice or by refrigerating or freezing machinery.

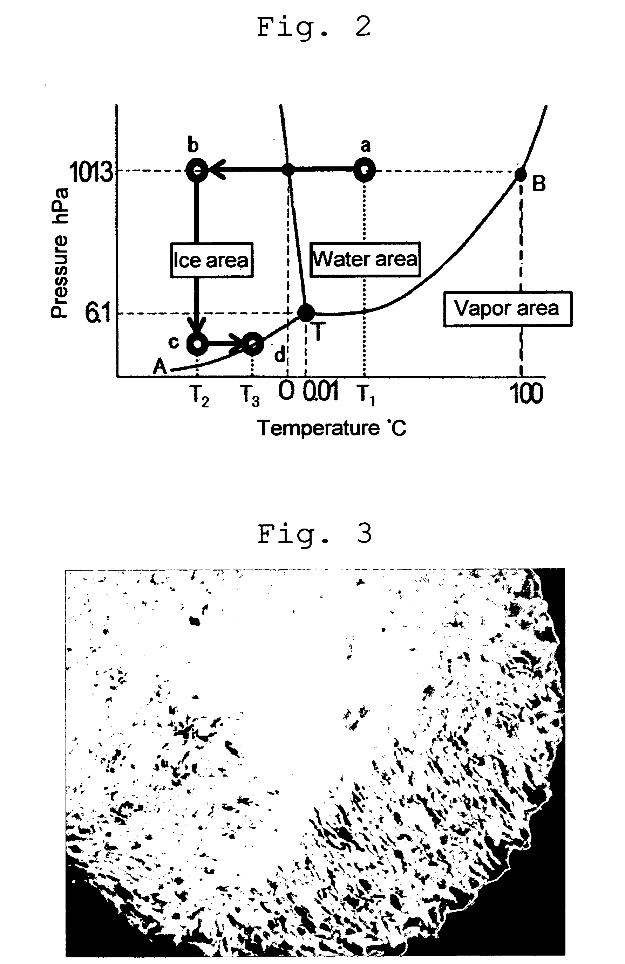

Finely-dispersed ice particles are evaporated directly and dispersed out of the compact without returning to the water, i.e., the liquid phase. The pressure-temperature phase diagram of water as shown in FIG. 2 was utilized to achieve this goal. The diagram shows that solid phase (ice), liquid phase (water), gas phase (vapor) are dependent on temperature and pressure, and that the borders comprise two phases and the triple point T comprises three phases.

As detailed below and shown in FIG. 2, in accordance with the method of the invention, water is rapidly turned into ice particles and the ice particles evaporate directly out from the ceramic material without first turning into water.

In FIG. 2, T1 represents the temperature of the water contained in the compact immediately after shape-forming of the silicon alloy argil. Since the water is under a pressure of 1 atmosphere, or about 1013hPa, point a represents the state of the water within the shaped compact.

Immediately after the shape forming, the water contained in the compact is dispersed in fine particles. When the compact is cooled down quickly to the temperature T2 of the cooling medium such as liquid nitrogen, the water within the compact is frozen while still in a finely-dispersed condition and is transferred to the state represented by point b.

The frozen compact is put in a container which is then evacuated to reduce the pressure within the container to a low level, below about 6.1hPa, the pressure at the triple point T in the pressure-temperature phase diagram. While the compact is maintained under this reduced pressure, the frozen water within the compact is transferred to the state represented by point c.

The temperature is then raised to T3 (point d), while the pressure is maintained at a level below the pressure at the triple point T. When the temperature is raised to T3, the ice within the compact turns directly into vapor and rapidly sublimates out from the compact. Provided that the vacuum is maintained so that the pressure is kept below the level at the triple point T, sublimation of ice to vapor occurs regardless of how the temperature is raised. Subsequent drying can be made more efficient by warming the compact using a heating means.

It was possible to decrease water content ratio in the compact from an initial value of 23% to 1% or less without external heating, by retaining the compact for 30 hours in a container at a pressure below the pressure at the triple point T.

As the container is depressurized, gas such as air needs to enter the container to return it to atmospheric pressure before the compact can be removed. However, it is preferable to introduce nitrogen instead of air in the depressurization step, because, if air is introduced, oxygen in the air goes into the dried compact and reacts with carbon in the wall material of the sintering furnace, generating carbon dioxide, which will cause damage to the wall.

FIG. 3 is a cross-sectional photograph showing the inside of a ball after drying and before sintering. The photograph shows a condition after the ice particles turn into vapor, which passes out of the compact through minute spaces between ceramic particles. The maximum dimension of the spaces left between ceramics particles after water evaporation is 0.1 micrometers or less, and the dried compact had no holes of the kind that would have been created by the conventional method of shape-forming and drying.

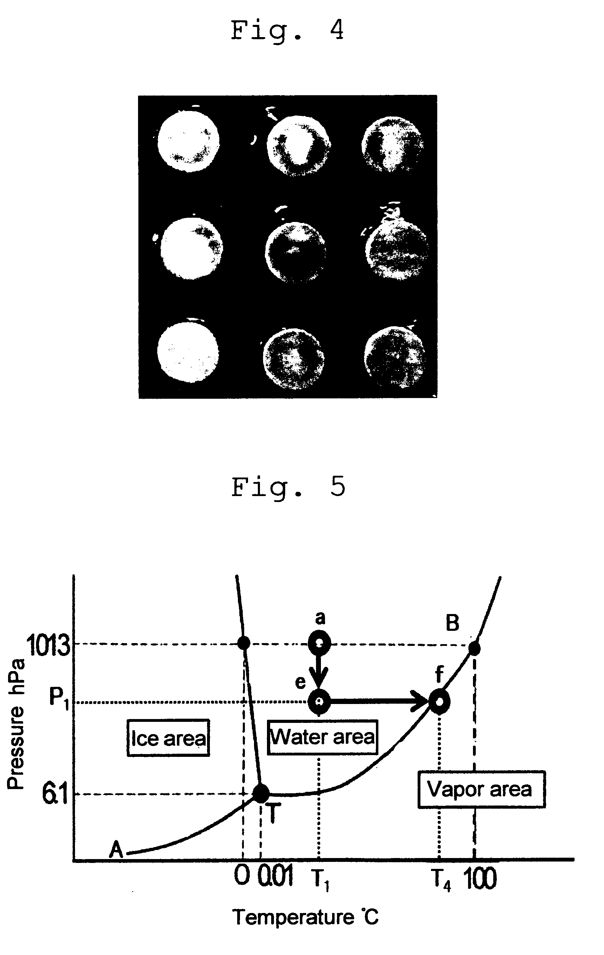

FIG. 4 is a cross-sectional photograph showing the inside of the balls after sintering. The minute spaces as seen in FIG. 3 are completely sintered, the inside of the ball is densified, and there are no inner cracks. A comparison of FIG. 4 with FIGs. 6 and 7, which show the inner cracks associated with the conventional method, shows the effects that distinguish the invention.

The microwave irradiation (MW) method will now be described with reference to the pressure temperature phase diagram of FIG. 5. In the MW method, the formation of inner cracks after sintering is prevented by using microwave heating to evaporate and disperse water within the compact.

When the temperature of the water contained in the silicon alloy argil immediately after its shape-forming is at an ambient level, T1, with the water under a pressure of 1 atmosphere, point a represents the state of the water in the shaped ceramic, as in FIG. 2.

When the pressure inside a container in which the compact is retained is reduced to P1, i.e., to a pressure below 1 atmosphere, the vaporization temperature is lowered from 100°C to T4, which is recommended because it makes dehydration more effective. Point e represents the state of water within the compact under a reduced pressure.

Microwave radiation at a frequency of 2.450GHz is directed into the compact in which water is in the condition represented by point e, and is still in a finely dispersed condition because it has not yet started to aggregate. Microwave generators that generate microwave radiation at 2.450GHz are readily available, and microwave radiation at that frequency is absorbed well by water and able to heat water easily. Other frequencies, preferably in the range from about 0.9 GHz to 6 GHz, can be used. When heated from inside the compact, water is evaporated at temperature T4 (point f). Maintaining the inside of the container under a reduced pressure during microwave irradiation makes the process more effective.

As in the FD method, it has been confirmed that the MW method is effective in preventing the inner cracks in the sintered compacts as seen in FIGs. 6 and 7.

### Example 1

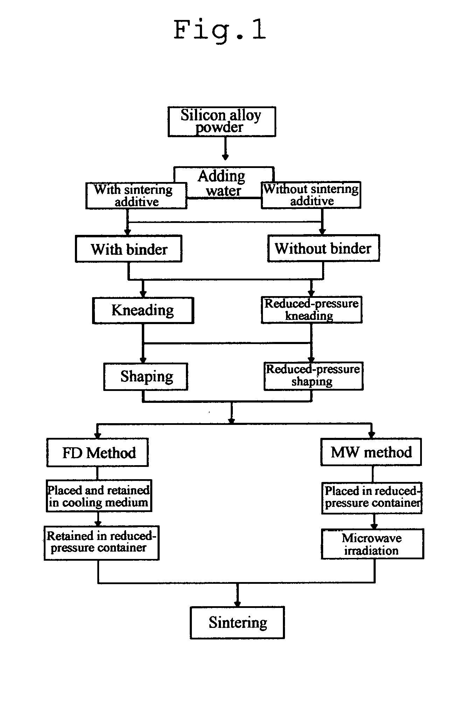

Specific examples of the invention will be described with reference to FIG. 1.

Two kinds of a silicon alloy, having compositions as shown in Table 1, were used as testing materials. Testing material A is a silicon alloy powder which has been commercially marketed under the trademark "MERAMIX" as "MERAMIX S1" by ISMAN J Corporation at Think Maraikobo, 8 Minami-Watarida-cho 1-chome, Kawasaki-ku, Kawasaki-shi, Kanagawa 210-0855, Japan. Testing material B is a silicon alloy powder which can be sintered at a lower temperature as compared to testing material A.

**[Table 1]**

| **Testing Material** | **Si** | **N** | **Al** | **O** |
|---|---|---|---|---|
| **A** | **47.2** | **33.0** | **10.3** | **7.0** |
| **B** | **50.2** | **29.8** | **7.2** | **12.8** |

Ordinary tap water or ion-exchanged water may be used as the main binder, but either inorganic binders or sintering additives, or both, may be added. The preferable weight % ratios are 10-40 w% water, 0.5-10 w% for the inorganic binders, which are mostly composed of silicon dioxide and aluminum, and 5 w% or less for the sintering additives.

These materials are kneaded to make a silicon alloy argil which is shaped to a form corresponding to the final product.

Conducting the kneading process, the shaping process, or both, in a reduced-pressure environment below atmospheric pressure enables the sizes of the microscopic pores that are inevitably included within the argil or compacts to be reduced as much as possible. The term "microscopic pores" refers to minute pores which can be detected under a microscope.

Accordingly, conducting the kneading process, the forming process, or both in a reduced-pressure environment below normal pressure is recommended for the manufacture of silicon alloy sintered bodies for applications in which high strength is a special requirement.

Experiments were conducted by varying following conditions to determine optimum conditions for dehydration and drying by the FD method and its effect:
(1) amount of time (in minutes) from the completion of shape forming as shown in FIG. 2 (point a) to the placing of the compact in liquid nitrogen or other cooling medium (point b).
(2) the cooling medium and its temperature (°C)
(3) the pressure (hPa) inside the reduced-pressure container for retaining frozen compacts (point c)
(4) the holding temperature (°C) and holding time (in hours) inside the reduced-pressure container (point c) until the water content ratio of the compact becomes 1 weight % or less.

The compacts, after the drying process, were sintered in a continuous sintering furnace designed for mass production and run under normal pressure in a nitrogen environment with 400V output. The sintering temperature was set at 1750°C for the material A and at 1600°C for the material B. Both materials were sintered for 2 hours.

The compacts were cut through their centers after sintering to measure cross-sectional hardness. The "cracks", the problem addressed by the invention, were examined by visual observation of the polished surface of the center section and by microscopic observation using a microscope magnification power of 100 times. The effects of the inorganic binder and the sintering additive were also examined.

The results are shown in Table 2.

**[Table 2]**

| Examples | Testing Material | Binder | | Sintering Additive | | FD Conditions | | | | | Sintering | Characteristics after sintering | |
|---|---|---|---|---|---|---|---|---|---|---|---|---|---|
| | | | | | | a→b | Cooling Media | Pressure at "c" | Conditions at "d" | | | | |
| | | Water (%) | Inorganic Binder | Added | None | Time (minutes) | °C | hPa | °C | Retention time (hours) | Temperature (C°) | Hardness (HV) | Inner Cracks |
| 1 | A | 25 | Added | ○ | | 1 | -196 | 6.0 | 0 | 30 | 1750 | 1520 | None |
| 2 | A | 25 | Added | ○ | | 3 | -196 | 6.0 | 20 | 10 | 1750 | 1515 | None |
| 3 | A | 25 | Added | ○ | | 5 | -196 | 6.0 | 30 | 5 | 1750 | 1535 | None |
| 4 | A | 27 | Added | ○ | | 5 | -80 | 6.0 | 30 | 5 | 1750 | 1530 | None |
| 5 | A | 25 | Added | ○ | | 5 | -196 | 7.0 | 0 | 30 | 1750 | 1525 | Observed |
| 6 | A | 25 | Added | ○ | | 10 | -198 | 6.0 | 0 | 30 | 1750 | 1520 | Observed |
| 7 | A | 25 | None | ○ | | 5 | -196 | 6.0 | 30 | 5 | 1750 | 1530 | None |
| 8 | A | 25 | Added | | ○ | 5 | -196 | 6.0 | 30 | 5 | 1750 | 1500 | None |
| 9 | B | 25 | Added | ○ | | 5 | -196 | 6.0 | 0 | 30 | 1600 | 1495 | None |
| 10 | B | 25 | Added | | ○ | 5 | -196 | 6.0 | 0 | 30 | 1600 | 1485 | None |

As is clear from Table 2, inner cracks were generated in Example 6, which was put into liquid nitrogen or other cooling media 10 minutes after shape forming (the time from point a to point b), and in Example 5, in which the pressure inside the reduced-pressure container retaining the compact was set at 7.0hPa.

These results revealed that inner cracks in sintered compacts can be prevented by putting the silicon alloy argil into liquid nitrogen or other cooling media within 5 minutes after shape forming, and by setting the pressure inside the reduced-pressure container to retain the compact below the triple point pressure shown in FIG. 2.

It was demonstrated that, if these FD method conditions are applied, the problem of inner cracks of sintered compacts can be resolved regardless of the addition of inorganic binders or sintering additives, and regardless of difference in sintering temperatures.

In addition, it was also determined that the testing material B can be sintered at a lower temperature as compared to the material A, and that, even without sintering additives, it can be sintered without generating cracks.

It should be noted that the optimal retaining time in the reduced-pressure container varies depending on the size of the reduced-pressure container, the capacity of the vacuum pump, and the size or quantity of the compacts to be put in the container. Under the conditions of this example, the shortest retention time required was 5 hours (see Table 2).

### Example 2

Experiments were also conducted by varying the following conditions to determine the optimum conditions for dehydration and drying by the MW method and its effects:
(1) the amount of time (in minutes) from the completion of shape forming as shown in FIG. 5 (point a) to the placing of the compact into a reduced-pressure container (point e) to which microwave radiation is applied
(2) the pressure (P1 in hPa) inside the reduced-pressure container for retaining compacts (point c)
(3) the evaporation temperature determined by P1 (T4 in °C)
(4) the holding time (minutes) at T4 (point f).

The microwave generator was operated on three-phase AC, and had a power output of 0.1-3kW, and a frequency of 2.450GHz.

The testing materials A and B were sintered after drying for 2 hours at 1750°C and 1600°C respectively.

The cross-sectional hardness and inner cracks were measured by the same method as in Example 1. The results are shown in Table 3.

**[Table 3]**

| Examples | Testing Material | Binder | | Sintering Additive | | MW Conditions | | | | | Sintering | Characteristics after Sintering | |
|---|---|---|---|---|---|---|---|---|---|---|---|---|---|
| | | | | | | a→e | e→f | Pressure at P₁ | Conditions at "f" | | | | |
| | | Water (%) | Inorganic Binder | Added | None | Time (minutes) | Time (minutes) | hPa | °C | Retention time(minutes) | Tempera- ture(C°) | Hardness (HV) | Inner Cracks |
| 11 | A | 25 | Added | ○ | | 3 | 5 | 950 | 90 | 5 | 1750 | 1525 | None |
| 12 | A | 25 | Added | ○ | | 3 | 5 | 950 | 90 | 7 | 1750 | 1510 | None |
| 13 | A | 25 | Added | ○ | | 5 | 3 | 950 | 90 | 3 | 1750 | 1540 | Observed |
| 14 | A | 27 | Added | ○ | | 5 | 5 | 950 | 90 | 5 | 1750 | 1525 | None |
| 15 | A | 25 | Added | ○ | | 10 | 5 | 950 | 90 | 5 | 1750 | 1530 | Observed |
| 16 | A | 25 | Added | ○ | | 10 | 5 | 950 | 90 | 10 | 1750 | 1510 | Observed |
| 17 | A | 25 | None | ○ | | 5 | 7 | 900 | 80 | 2 | 1750 | 1520 | Observed |
| 18 | A | 25 | Added | | ○ | 5 | 7 | 900 | 80 | 2 | 1750 | 1510 | Observed |
| 19 | B | 25 | Added | ○ | | 5 | 5 | 950 | 90 | 5 | 1600 | 1495 | None |
| 20 | B | 25 | Added | | ○ | 5 | 5 | 950 | 90 | 5 | 1600 | 1490 | None |

As is clear from Table 3, inner cracks were generated in Examples 15 and 16, in which the compacts were put into the reduced-pressure container to which microwave radiation was applied 10 minutes after shape forming (the time from point a to point e). Inner cracks were also generated in Examples 13, 17, and 18, in which the compacts were retained at T4 (point f) for 2 and 3 minutes.

These results revealed that no inner cracks are generated if silicon alloy argil is put into the reduced-pressure container and receives microwave irradiation within 5 minutes after shape forming, and is retained at temperature T4 (point f) for at least 5 minutes.

### INDUSTRIAL APPLICABILITY

Silicon alloy products manufactured by means of the methods of the invention have various characteristics as shown in FIG. 4.

**[Table 4]**

| Item | Silicon Alloy (Metal Ceramics) | Specialty Steel (Ferrous Alloy) |
|---|---|---|
| Weight (ratio) | 3.2 (1/3 weight of specialty steel) | 8 |
| Hardness | HV 1500 | HV700 |
| Rigidity | Equal to specialty steel | 210GPa |
| fatigue life | L₁₀Life≧ 4.0 E + 07 (at least equal to specialty steel) | L₁₀Life ≧ 1.0 E + 07 |
| Lubricity | Lubricant unnecessary | Lubricant necessary |
| Heatproof Temperature | at least 1250°C | 800°C |
| Resistance to Chemicals | Strongly resistant especially to acid | Poor |
| Magnetism | Nonmagnetic | Paramagnetic |
| Conductivity | Nonconductive | Highly conductive |
| Conductivity | Low thermal conductance(1/10 of steel) Provides extra thermal insulation | Highly conductive |
| Thermal Expansion | Low (1/10 of steel) | High |
| Electromagnetic wave reaction | Not to absorb up to 20GHz | To absorb |
| Affinity with resin | High | Low |
| Recyclability | Not to generate metallic oxide | Generates metallic oxide (harmful to humans) |

As indicated above, having distinguishing characteristics such as lightness, high mechanical strength, enhanced fatigue strength, nonmagnetism, heat resistance, or resistance to chemicals, ceramics products manufactured by the invention are applicable to a variety of purposes. Examples include bearing balls, races for bearing balls, parts for linear motion bearings, automobile components for power trains, power transmission shafts, turbochargers, exhaust manifolds, fuel injection systems such as common rail fuel injectors, components for turbines and landing gear of aircrafts, component parts of artificial skeletons, and parts for semiconductor manufacturing machines.

Further, due to its complete nonmagnetism, a silicon alloy can be advantageously used for bearing members for inverter-type power generators, electric motors. The silicon alloy ceramic material does not need to be treated by coating with nonmagnetic materials such as those that have been applied to ferrous bearing members for the purpose of preventing electric corrosion or iron loss caused by alternating electromagnetic fields.

Other specific applications in which the nonmagnetic character of the silicon alloy ceramic material is advantageous include bearing balls, roll axes, taper roll axes, inner and outer races holding these members, for wind power stations operated in an alternating electromagnetic field environment, and bearing balls, roll axes, taper roll axes, inner and outer races holding these members used for electric motors of hybrid vehicles and electric vehicles driven in an alternating electromagnetic field environment.

As indicated in Table 4, the products are distinguished by the fact that they are able to block electromagnetic waves from electric motors of hybrid vehicles or electric vehicles, utilizing the characteristic that they reflect electromagnetic waves up to 20GHz.

The dehydration and drying method of this invention can be utilized to manufacture quality compacts by being applied to the doctor blade method or the slip cast method, specifically in the process of shape forming of compacts from water slurry without organic binders.

Furthermore, the dehydration and drying method of this invention is also applicable to CIM (ceramics injection molding), an injection molding method conventionally carried out with the addition of significant quantities of organic solvents or waxes. CIM-shaped sintered compacts can be manufactured without a binder-removal step by using only water as a binder in place of conventional organic solvents or waxes, followed by injection molding, and then dehydration using the method of the invention.

Thus, the invention is capable of removing water within the compacts effectively and preventing cracks after sintering, even when water is used as a principal binder in manufacturing ceramics products. Accordingly, the invention allows high-speed shape-forming of ceramic products and therefore improves productivity, which reduces the price of industrial ceramics products and thereby increases opportunities for their application.

As mentioned previously, the method according to the invention also enables stable production of high quality ceramics products using water as a principal binder, without using harmful organic solvents. The application of this technique, can be expected to spread throughout the ceramics industry, which would bring about beneficial effects especially in view of the growing importance of environmental conservation, and thus would be able to meet the needs of various industries.

## Claims

1. A method for manufacturing a sintered silicon alloy comprising the steps of:
obtaining a raw material comprising a silicon alloy
powder including 30-70 weight % silicon, 10-45 weight % nitrogen, 1-40 weight % aluminum, and 1-40 weight % oxygen;
kneading the raw material with the addition of 10-40
weight % water as a binder to form a kneaded silicon alloy argil;
shaping the kneaded argil to form a silicon alloy
compact having a three-dimensional shape;
putting said compact in a cooling medium within 5
minutes after completion of the shaping step, and retaining the compact in said cooling medium for at least 5 minutes, thereby quick-freezing water contained within said compact in a finely-dispersed condition;
retaining the compact in a pressure-regulated
container in which the pressure is maintained at a level below the triple point pressure of water; and
thereafter, sintering said compact.

2. A method for manufacturing a sintered silicon alloy according to claim 1, in which at least one additive is added to the silicon alloy powder to form a mixture, the additive being from the group consisting of an inorganic binder and a sintering additive, the inorganic binder being composed mainly of silicon dioxide and aluminum, and, if present, constituting 0.5 - 10 weight % of the mixture, and the sintering additive, if present, constituting up to 5 weight % of the mixture.

3. A method for manufacturing a sintered silicon alloy according to claim 1 or 2, in which at least one of the kneading step and the shape forming step are conducted in a reduced-pressure environment below atmospheric pressure.

4. A method for manufacturing a sintered silicon alloy comprising the steps of:
obtaining a raw material comprising a silicon alloy
powder including 30-70 weight % silicon, 10-45 weight % nitrogen, 1-40 weight % aluminum, and 1-40 weight % oxygen;
kneading the raw material with the addition of 10-40
weight % water as a binder to form a kneaded silicon alloy argil;
shaping the kneaded argil to form a silicon alloy
compact having a three-dimensional shape;
exposing said compact to continuous microwave
radiation for at least 5 minutes; and
sintering said compact.

5. A method for manufacturing a sintered silicon ally according to claim 4, including putting the shaped silicon alloy compact in a cooling medium within 5 minutes after completion of the shaping step, and retaining the compact in said cooling medium for at least 5 minutes, thereby quick-freezing water contained within said compact in a finely-dispersed condition.

6. A method for manufacturing a sintered silicon alloy according to claim 5, wherein said compact is exposed to a reduced pressure below atmospheric pressure following retention of the compact in the cooling medium, and wherein, over at least part of the time during which the compact is exposed to continuous microwave radiation, the compact is exposed to a pressure below 1 atmosphere.

7. A method for manufacturing a sintered silicon alloy according to claim 4, including the step of putting said compact in a container and exposing the compact to a reduced pressure below atmospheric pressure within 5 minutes following completion of the shaping step, wherein the step of exposing the compact to continuous microwave radiation is commenced within 5 minutes following completion of the shaping step wherein, over at least part of the time during which the compact is exposed to continuous microwave radiation, the compact is in said container and the pressure within said container is held at a pressure below 1 atmosphere.

8. A method for manufacturing a sintered alloy according to claim 6 or 7, wherein over substantially the entire time during which the compact is exposed to continuous microwave radiation, the compact is exposed to a pressure below 1 atmosphere.

9. A method for manufacturing a sintered silicon alloy according to any one of the claim 4 to 8, wherein the frequency of said microwave radiation is within the range from about 0.9 GHz to 6 GHz.

10. A method for manufacturing a sintered silicon alloy according to claim 9, wherein the frequency of said microwave radiation is 2.450 GHz.

11. A method for manufacturing a sintered silicon alloy according to any one of the claim 4 to 10, in which at least one additive is added to the silicon alloy powder to form a mixture, the additive being from the group consisting of an inorganic binder and a sintering additive, the inorganic binder being composed mainly of silicon dioxide and aluminum, and, if present, constituting 0.5 - 10 weight % of the mixture, and the sintering additive, if present, constituting up to 5 weight % of the mixture.

12. A method for manufacturing a sintered silicon alloy according to any one of the claim 4 to 11, in which at least one of the kneading step and the shape forming step are conducted in a reduced-pressure environment below atmospheric pressure.
